# EUROPEAN PATENT SPECIFICATION

(11) **EP 2 631 978 B1**
(45) Date of publication and mention of the grant of the patent: **20.05.2015**
(21) Application number: 13150298.1
(22) Date of filing: 04.01.2013
(51) Int. Cl.: H01M 8/08, H01M 4/86, H01M 4/92, H01M 4/90, H01M 8/10

(54) **Electrode catalyst for fuel cell, method of preparing the same, and membrane electrode assembly and fuel cell including the electrode catalyst**
Elektrodenkatalysator für eine Brennstoffzelle, Verfahren zu seiner Herstellung sowie Membranelektrodenanordnung und Brennstoffzelle mit dem Elektrodenkatalysator
Catalyseur d'électrode pour pile à combustible, son procédé de préparation, et ensemble membrane-électrodes et pile à combustible incluant le catalyseur d'électrode

(30) Priority: 22.02.2012 KR 20120018056
(43) Date of publication of application: 28.08.2013
(73) Proprietor: Samsung Electronics Co., Ltd, Gyeonggi-do 443-742 (KR)
(72) Inventor: Park, Jung-ock, 449-712 Gyeonggi-do (KR); Lee, Yoon-hoi, 449-712 Gyeonggi-do (KR); Kim, Tae-young, 449-712 Gyeonggi-do (KR); Hong, Suk-gi, 449-712 Gyeonggi-do (KR); Ha, Jin-su, 449-712 Gyeonggi-do (KR)
(74) Representative: Zijlstra, Robert Wiebo Johan

(56) References cited:
- EP-A1- 2 131 425
- US-A1- 2008 063 921
- US-A1- 2010 040 935

## Description

### BACKGROUND OF THE INVENTION

The present disclosure relates to electrode catalysts for fuel cells, methods of preparing the same, and membrane electrode assemblies and fuel cells including the electrode catalysts.

Fuel cells, which have gained attention as one of the alternative energy sources, can be classified as polymer electrolyte membrane fuel cells (PEMFCs), direct methanol fuel cells (DMFCs), phosphoric acid fuel cells (PAFCs), molten carbonate fuel cells (MCFCs), and solid oxide fuel cells (SOFCs) according to the types of an electrolyte and fuel used therein.

PEMFCs operating at 100°C or higher temperatures (e.g., about 150 to about 180 °C) in non-humidified conditions do not need a humidifier, and water is present as steam in the PEMFCs. Thus, as compared to PEMFCs operating at low temperatures, water can be easily discharged. Therefore, such PEMFCs are known to be convenient in terms of control of water management and highly reliable in terms of system operation.

Currently, acid doping-based membrane electrode assemblies (MEAs) are commercially used as MEAs for high-temperature and non-humidity PEMFCs. Non-acid doping-based MEAs have not yet been commercialized and research thereon is in progress.

In a PEMFC using a phosphoric acid doping-based MEA as an acid doping-based MEA, phosphoric acid that permeates into an electrode from an electrolyte membrane acts as a vital proton conductor in the electrode, and thus, a catalyst layer needs to secure a path for the migration of a fuel at a maximum level and phosphoric acid needs to be dispersed therein.

At an initial stage of fuel cell operation, the diffusion of a fuel and the dispersion of phosphoric acid in a catalyst layer are insufficiently performed, and thus, the performance of an MEA is low. During the operation of the fuel cell, phosphoric acid is dispersed in the catalyst layer, whereby the performance of the MEA is gradually improved. If such an activation process lasts long, there are limitations on using a fuel cell system right after fabrication thereof. To obtain a cell performance even at an initial stage of operation, there is a need to develop a technology for shortening an activation time of an MEA.

### SUMMARY OF THE INVENTION

The invention is defined in independent claims 1 and 5.

Provided are electrode catalysts for fuel cells which shorten an activation time of a membrane electrode assembly ("MEA").

Provided are methods of preparing the electrode catalysts for fuel cells.

Provided are membrane electrode assemblies including the electrode catalysts for fuel cells.

Provided are fuel cells including the membrane electrode assemblies.

Additional aspects will be set forth in part in the description which follows and, in part, will be apparent from the description, or may be learned by practice of presented embodiments.

According to the invention an electrode catalyst for a fuel cell includes a first catalyst that exhibits hydrophilicity and includes pores, wherein at least 50 volume percent ("volume%") of the pores have an average diameter of about 100 nanometers ("nm") or less.

The first catalyst may exhibit hydrophilicity in which a [C-O]/[C=O] bond ratio of as determined by X-ray photoelectron spectroscopy ("XPS") is about 0.8 or greater.

The first catalyst includes a carbonaceous support and a Group 8, Group 9, or Group 10-based metal catalyst disposed on the carbonaceous support. The metal catalyst may include at least one selected from the group including platinum ("Pt"), palladium ("Pd"), ruthenium ("Ru"), iridium ("Ir"), osmium ("Os"), a Pt-Pd alloy, a Pt-Ru alloy, a Pt-Ir alloy, a Pt-Os alloy, and a Pt-M alloy where M is at least one selected from the group including gallium ("Ga"), titanium ("Ti"), vanadium ("V"), chromium ("Cr"), manganese ("Mn"), iron ("Fe"), cobalt ("Co"), nickel ("Ni"), copper ("Cu"), silver ("Ag"), gold ("Au"), zinc ("Zn"), tin ("Sn"), molybdenum ("Mo"), tungsten ("W"), and rhodium ("Rh").

An amount of the first catalyst is in a range of 20 to 90 weight percent ("wt%") based on the electrode catalyst.

The electrode catalyst further includes a second catalyst that exhibits hydrophobicity and includes pores, wherein at least 50 volume% of the pores have an average diameter of 100 nm or greater.

The second catalyst may have hydrophobicity in which a [C-O]/[C=O] bond ratio as determined by XPS is 0.7 or less.

The second catalyst includes a carbonaceous support and a Group 8, Group 9, or Group 10 metal catalyst disposed on the carbonaceous support. The metal catalyst may include at least one selected from the group including Pt, Pd, Ru, Ir, Os, a Pt-Pd alloy, a Pt-Ru alloy, a Pt-Ir alloy, a Pt-Os alloy, and a Pt-M alloy where M is at least one selected from the group including Ga, Ti, V, Cr, Mn, Fe, Co, Ni, Cu, Ag, Au, Zn, Sn, Mo, W, and Rh.

According to another embodiment, a method of preparing an electrode catalyst for a fuel cell includes hydrophilically treating a first catalyst including pores, wherein at least 50 volume% of the pores have an average diameter of 100 nm or less.

The hydrophilically treating process may be performed by ultraviolet treatment, plasma treatment, ozone treatment, corona discharge treatment, or chemical treatment.

The hydrophilically treating process may be performed by ultraviolet treatment using ultraviolet rays having an intensity of 1 to 30 milliwatts per square centimeter ("mW/cm²") for 1 to 10 hours.

The method may further include mixing the ultraviolet rays-treated first catalyst with a second catalyst exhibiting hydrophobicity and including pores, wherein at least 50 volume% of the pores have an average diameter of 100 nm or greater.

According to another embodiment, a membrane electrode assembly includes a cathode; an anode facing the cathode; and an electrolyte membrane disposed between the cathode and the anode, wherein at least one of the cathode or the anode includes a catalyst layer including the electrode catalyst for a fuel cell.

The electrode catalyst may have a [C-O]/[C=O] bond ratio in a range of 0.8 to 1.1 as determined by XPS.

The electrolyte membrane may include phosphoric acid.

When the membrane electrode assembly operates, phosphoric acid is dispersed into pores having an average diameter of 100 nm or less that are formed in the first catalyst of the catalyst layer.

After 24 hours of operation of the membrane electrode assembly, the assembly may have a cell voltage of 0.55 volts ("V") or more at a current density of 0.5 Amperes per square centimeter ("A/cm²") and voltage loss due to a material resistance of the MEA may be 5% or less with respect to the cell voltage.

The membrane electrode assembly may have a cell voltage of 0.63 V or more at a current density of 0.2 A/cm² within 5 hours after starting to operate at 150°C in non-humidified conditions.

According to another embodiment, a fuel cell includes the membrane electrode assembly.

### BRIEF DESCRIPTION OF THE DRAWINGS

These and/or other aspects will become apparent and more readily appreciated from the following description of embodiments, taken in conjunction with the accompanying drawings in which:
FIG. 1 is a diagram illustrating a catalyst layer formed using an electrode catalyst for a fuel cell, according to an embodiment;
FIG. 2 is an exploded perspective view illustrating a structure of a fuel cell according to an embodiment;
FIG. 3 is a cross-sectional view of a membrane electrode assembly (MEA) constituting the fuel cell of FIG. 2, according to an embodiment;
FIG. 4 is a graph of relative intensity (arbitrary units) versus binding energy (electronovolts) showing X-ray photoelectron spectroscopy (XPS) results of a catalyst layer used in each of the fuel cells manufactured according to Examples 1 and 4 and Comparative Examples 1 and 2;
FIG. 5 is a graph of cell voltage (volts) versus time (hour) showing measurement results of cell voltage according to operating time at a current density of 0.2 A/cm² of each of the fuel cells of Examples 1 to 4 and Comparative Examples 1 and 2; and
FIG. 6 is a graph showing time (hour) taken to raise a cell voltage up to 0.63 V at a current density of 0.2 A/cm² of each of the fuel cells of Examples 1 to 4 and Comparative Examples 1 and 2.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer, or section discussed below could be termed a second element, component, region, layer, or section without departing from the teachings of the present embodiments.

It will be understood that when an element is referred to as being "on" another element, it can be directly on the other element or intervening elements may be present therebetween. In contrast, when an element is referred to as being "directly on" another element, there are no intervening elements present.

The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In general, at an initial stage of operation of a membrane electrode assembly (MEA), phosphoric acid in a catalyst layer stays in large pores and closes a path for fuel migration, and thus, cell performances are relatively low. During the operation of the MEA, the phosphoric acid migrates to small pores (≤ 100 nm) and the fuel moves through the large pores (> 100 nm), whereby cell performances are gradually improved. According to one or more embodiments, a catalyst with pores formed therein into which phosphoric acid is relatively slowly introduced and that have a small diameter of about 100 nm or less exhibits hydrophilicity by hydrophilic treatment, thereby rapidly inducing the introduction of phosphoric acid into pores with a small diameter and controlling a fuel to flow into pores with a large diameter, resulting in improvement of initial performances of an MEA during the operation.

According to the invention, an electrode catalyst for a fuel cell includes a first catalyst that exhibits hydrophilicity and includes pores, wherein at least 50 volume% of the pores have an average diameter of 100 nm or less in a pore distribution.

The first catalyst is in the form of a metal catalyst supported on a catalyst support.

The metal catalyst is a Group 8, Group 9, or Group 10 catalyst, for example a platinum (Pt)-based catalyst.

The Group 8, Group 9, or Group 10 metal catalyst may be at least one selected from the group including Pt, palladium (Pd), ruthenium (Ru), iridium (Ir), osmium (Os), a Pt-Pd alloy, a Pt-Ru alloy, a Pt-Ir alloy, a Pt-Os alloy, and a Pt-M alloy where M is at least one selected from the group including gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), and rhodium (Rh). In addition, the metal catalyst may be any Pt-based catalyst that may be used in the art without being limited thereto. The Group 8, Group 9, or Group 10 metal catalyst, for example the Pt-based catalyst may be in the form of nanoparticles having an average diameter of about 10 nm or less. When the average diameter of the metal catalyst is greater than 10 nm, surface areas of the nanoparticles are too small, and thus, the activity of the metal catalyst may decrease. For example, the average diameter of the metal catalyst nanoparticles may be in a range of 2 nm to 10 nm.

The metal catalyst is disposed on a carbonaceous support. For example, the carbonaceous support may be at least one selected from the group including carbon powder, carbon black, acetylene black, Ketjen black, activated carbon, carbon nanotubes, carbon nanofibers, carbon nanowires, carbon nanohorns, carbon aerogels, carbon xerogels, and carbon nanorings. The carbonaceous support may have an average diameter of particles ranging from 20 nm to 50 nm.

The metal catalyst disposed on a carbonaceous support may be a commercially available metal catalyst or may be prepared by immersing a metal catalyst in a carbonaceous support. The immersing process is well known to one of ordinary skill in the art, and thus, may be understood by one of ordinary skill in the art. Therefore, a detailed description thereof will not be provided herein.

The first catalyst include pores formed therein that have a small diameter enabling adsorption of phosphoric acid. The first catalyst includes pores, wherein at least 50 volume% of the pores have an average diameter of 100 nm or less in a pore distribution.

The size of the pores is determined by physical properties of a catalyst itself. In other words, the size of the pores is determined according to characteristic physical properties of a catalyst itself, regardless of other properties such as the size, specific surface area, and surface properties of catalyst particles. An average diameter of the pores may be measured using one of various well-known methods, for example, an optical microscopy, an electron microscopy, X-ray scattering, gas-adsorption, mercury intrusion, liquid extrusion, a molecular weight cut off method, a fluid displacement method, and pulse NMR.

When Pt, which is known as an effective catalyst for the power generation of a fuel cell, is used in a reaction involving hydrogen, due to the hydrophobicity of the Pt surface, strong adsorption of water molecules scattered inside of a fuel cell onto the surface of Pt may be prevented and hydrogen molecules may be easily adsorbed onto the surface of Pt. Thus, since energy required for the adsorption of hydrogen molecules onto the surface of Pt is low, a fuel cell using a Pt catalyst can generate power more rapidly and effectively. Recent research has found that when Pt undergoes a reaction involving hydrogen, a hydrogen layer embedded in the Pt to one atom thickness is formed and the Pt exhibits hydrophobicity due to the hydrogen layer, thereby accelerating a chemical reaction.

Therefore, the first catalyst (e.g., Pt-based catalyst) may have hydrophilicity or an improved hydrophilicity by separate hydrophilic treatment.

As used herein, the term "hydrophilicity" means properties that can promote the introduction of phosphoric acid due to a highly polar group present on a catalyst surface, such as a carbonyl group (>C=O), a carboxyl group (-C(O)OH), and a hydroxyl group (-OH).

A hydrophilicity degree of the electrode catalyst may be represented by a [CO]/[C=O] bond ratio as determined by X-ray photoelectron spectroscopy ("XPS"). In this regard, the bond ratio indicates an intensity ratio of a [C-O] peak to a [C=O] peak in an XPS spectrum. Chemical bonding states of an O1s peak by oxygen present in a catalyst may be represented by C-O and C=O peaks. When a catalyst is surface-modified by hydrophilic treatment, carbon in a catalyst support reacts with oxygen in air, and thus, the C-O and C=O peaks of a catalyst layer may be changed to some extent. According to XPS measurement results, it is confirmed that a hydrophilically-treated catalyst has a higher [C-O]/[C=O] bond ratio than a catalyst that is not hydrophilically treated, and a [C-O]/[C=O] bond ratio increases as the amount of the hydrophilically-treated catalyst based on a total amount of a catalyst increases. In other words, as a [C-O]/[C=O] bond ratio increases, the hydrophilicity of the catalyst also increases.

In an embodiment, the first catalyst may have hydrophilicity in which a [CO]/[C=O] bond ratio is 0.8 or more. Relatively, in a catalyst that is not hydrophilically treated, a [C-O]/[C=O] bond ratio as determined by XPS may be 0.7 or less. The [CO]/[C=O] bond ratio of the first catalyst may, specifically, be 0.8 or more, 0.9 or more, 1.0 or more, 1.3 or more, 1.5 or more, or 2.0 or more. The first catalyst may be mixed with a second catalyst exhibiting hydrophobicity, to prepare an electrode catalyst, and thus, the first catalyst may as well have a higher degree of hydrophilicity. In another embodiment, a [C-O]/[C=O] bond ratio of the first catalyst may be 1.0 or more.

The hydrophilic treatment process may be performed by ultraviolet treatment, plasma treatment, ozone treatment, corona discharge treatment, or chemical treatment, but the hydrophilic treatment method is not limited to the above examples.

The amount of the first catalyst is in a range of 10 to 90 wt%, specifically, 20 to 90 wt% based on the electrode catalyst. When the amount of the first catalyst is within these ranges, a fuel cell including the electrode catalyst may exhibit excellent cell performance.

The electrode catalyst for a fuel cell further includes a second catalyst that exhibits hydrophobicity and includes pores, wherein at least 50 volume% of the pores have an average diameter of 100 nm or greater. The second catalyst has a different pore distribution from that of the first catalyst and is not hydrophilically treated, unlike the first catalyst. The second catalyst may be any hydrophobic catalyst that is commonly used in the art.

The second catalyst is in the form of a metal catalyst disposed on a catalyst support. The second catalyst includes a carbonaceous support and a metal catalyst disposed on the carbonaceous support.

The metal catalyst may be at least one selected from the group including Pt, Pd, Ru, Ir, Os, a Pt-Pd alloy, a Pt-Ru alloy, a Pt-Ir alloy, a Pt-Os alloy, and a Pt-M alloy where M is at least one selected from the group including Ga, Ti, V, Cr, Mn, Fe, Co, Ni, Cu, Ag, Au, Zn, Sn, Mo, W, and Rh. A carbonaceous support capable of supporting the metal catalyst may be, for example, at least one selected from the group including carbon powder, carbon black, acetylene black, Ketjen black, activated carbon, carbon nanotubes, carbon nanofibers, carbon nanowires, carbon nanohorns, carbon aerogels, carbon xerogels, and carbon nanorings.

The second catalyst, including the metal catalyst, exhibits hydrophobicity as described above, and may have a high catalytic activity so as for a fuel cell including the second catalyst to efficiently generate power.

The second catalyst has a porous structure with a pore distribution that enables a fuel to smoothly move therethrough. The second catalyst includes pores, wherein at least 50 volume% of the pores have an average diameter of 100 nm or more in a pore distribution.

The amount of the second catalyst is in a range of 10 to 90 wt%, specifically, 10 to 80 wt% based on the electrode catalyst. When the amount of the second catalyst is within these ranges, a fuel cell including the electrode catalyst may exhibit excellent cell performance.

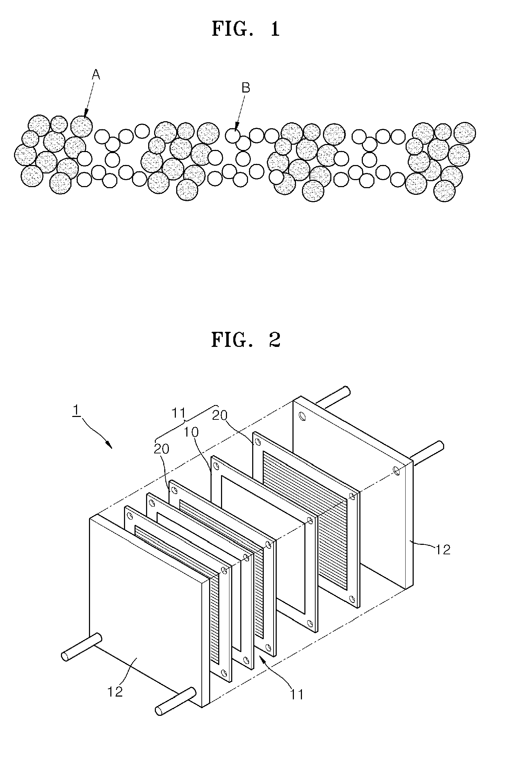

FIG. 1 is a diagram illustrating a catalyst layer formed using an electrode catalyst for a fuel cell, according to an embodiment.

As illustrated in FIG. 1, the catalyst layer may include a first catalyst A that exhibits hydrophilicity by hydrophilic treatment and a second catalyst B that is not hydrophilically treated and exhibits hydrophobicity.

Although the first catalyst A and the second catalyst B are uniformly mixed and dispersed, catalyst particles having the same properties agglomerate with each other to some extent to form the catalyst layer. Thus, pores formed in the first catalyst A may be maintained hydrophilic and pores formed in the second catalyst B may be maintained hydrophobic. Small pores having a diameter of 100 nm or less formed in the first catalyst A have hydrophilicity, and thus, phosphoric acid is rapidly introduced into the hydrophilic small pores even at an initial stage of operation of MEA, thereby providing a path for the migration of protons. Large pores having a diameter of 100 nm or more formed in the second catalyst B may be used as a path for the migration of a gaseous fuel. Through the control of hydrophilicity of the pores of the electrode catalyst, an activation time of an MEA may be shortened and cell performances may be improved even at an initial stage of operation of the MEA.

According to the invention a method of preparing an electrode catalyst for a fuel cell includes hydrophilically treating a first catalyst including pores, wherein at least 50 volume% of the pores have an average diameter of 100 nm or less in a pore distribution.

The first catalyst may include a carbonaceous support and a Pt-based catalyst disposed on the carbonaceous support and include pores, wherein at least 50 volume% of the pores have an average diameter of 100 nm or less in a pore distribution. A material for forming the first catalyst is the same as described above.

The hydrophilic treatment is a process whereby a surface of the first catalyst is modified to be hydrophilic. Examples of the hydrophilic treatment method include, but are not limited to ultraviolet treatment, plasma treatment, ozone treatment, corona discharge treatment, and chemical treatment.

According to an embodiment, the surface of the first catalyst may be modified to be hydrophilic by ultraviolet ("UV") treatment. The UV surface modification process may be performed by breaking molecular bonds of a catalyst support by irradiation of ultraviolet rays and linking oxygen in air thereto to form a highly polar group such as a carbonyl group (>C=O), a carboxyl group (-C(O)OH), or a hydroxyl group (-OH), thereby modifying the surface of the first catalyst to be hydrophilic. In this regard, the ultraviolet rays irradiated for UV treatment need to have an energy that is higher than a molecular binding energy of the first catalyst. Due to formation of the binding of highly polar molecules, the first catalyst may have an improved adsorptive capacity with respect to phosphoric acid.

The UV treatment process may be performed by irradiation of ultraviolet rays at a degree at which the surface of the first catalyst is rendered hydrophilic. For example, the UV treatment process may be performed using ultraviolet rays having an intensity of 1 to 30 mW/cm² for 1 to 10 hours. In an embodiment, the UV treatment process may be performed by spreading the first catalyst in an ultraviolet oven to a thickness of 0.1 to 5 mm and exposing the first catalyst to ultraviolet rays having an intensity of 1 to 30 mW/cm² for a certain period of time, thereby rendering the surface of the first catalyst hydrophilic.

The method of preparing an electrode catalyst for a fuel cell includes mixing the first catalyst with a second catalyst that exhibits hydrophobicity and includes pores, wherein at least 50 volume% of the pores have an average diameter of 100 nm or more in the pore distribution.

The second catalyst does not undergo a separate hydrophilic treatment and may be any hydrophobic catalyst that is commonly used in a fuel cell. For example, the second catalyst may include a carbonaceous support and a Pt-based catalyst disposed on the carbonaceous support. A detailed description of the second catalyst has already been provided above.

According to another embodiment, a MEA includes a cathode; an anode facing the cathode; and a polymer electrolyte membrane disposed between the cathode and the anode, in which at least one of the cathode and the anode includes a catalyst layer including the electrode catalyst for a fuel cell described above.

According to an embodiment, a [C-O]/[C=O] bond ratio of the catalyst layer including the electrode catalyst for a fuel cell may be about 0.8 or more as determined by XPS. When the catalyst layer includes a first catalyst exhibiting hydrophilicity and a second catalyst exhibiting hydrophobicity, a [C-O]/[C=O] bond ratio of the catalyst layer may be in a range of about 0.8 to about 1.1, about 0.8 to about 1.0, or about 0.8 to about 0.96 as determined by XPS.

According to another embodiment, a fuel cell includes the MEA.

Examples of the fuel cell include a polymer electrolyte membrane fuel cell ("PEMFC"), a phosphoric acid fuel cell ("PAFC"), and a direct methanol fuel cell ("DMFC").

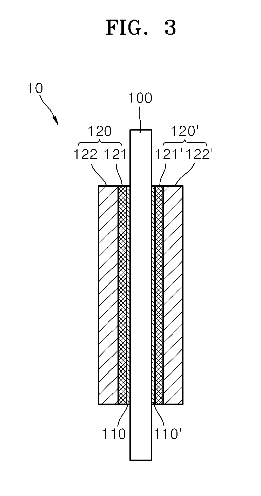

FIG. 2 is an exploded perspective view of a fuel cell 1 according to an embodiment, and FIG. 3 is a cross-sectional view of a MEA 10 of the fuel cell 1 of FIG. 2, according to an embodiment.

Referring to FIG. 2, the fuel cell 1 includes two unit cells 11 that are interposed between a pair of holders 12. Each of the unit cells 11 includes an MEA 10 and bipolar plates 20 disposed on both sides of the MEA 10 in a thickness direction of the MEA 10. The bipolar plates 20 may each include conductive metal or carbon and may each contact the MEA 10, so that the bipolar plates 20 function as a current collector and supply oxygen and a fuel to a catalyst layer of the MEA 10.

In FIG. 2, the fuel cell 1 includes two unit cells 11, but the number of unit cells is not limited thereto. For example, the number of the unit cells 11 may be tens to hundreds according to characteristics required for a fuel cell.

Referring to FIG. 3, the MEA 10 includes an electrolyte membrane 100; catalyst layers 110 and 110' that are disposed on both sides of the electrolyte membrane 100 in a thickness direction thereof; and gas diffusion layers 120 and 120' that include microporous layers 121 and 121' and supports 122 and 122', respectively, in which the microporous layer 121 and the support 122 are disposed on the catalyst layer 110, and the microporous layer 121' and the support 122' are disposed on the catalyst layer 110'.

The gas diffusion layers 120 and 120' may have porosity, so that they diffuse oxygen and a fuel supplied through the bipolar plates 20 to entire surfaces of the catalyst layers 110 and 110', rapidly discharge water generated from the catalyst layers 110 and 110', and allow air to smoothly flow therethrough. In addition, the gas diffusion layers 120 and 120' need to be electrically conductive so as to transfer current generated from the catalyst layers 110 and 110'.

The gas diffusion layer 120 includes the microporous layer 121 and the support 122, and the gas diffusion layer 120' includes the microporous layer 121' and the support 122'. The supports 122 and 122' may be formed of an electrically conductive material such as a metal or a carbonaceous material. For example, the supports 122 and 122' may be a conductive substrate such as carbon paper, carbon cloth, carbon felt, or metal cloth, but are not limited thereto.

The microporous layers 121 and 121' may generally include a conductive powder having a small diameter, for example, carbon powder, carbon black, acetylene black, activated carbon, carbon fibers, fullerenes, carbon nanotubes, carbon nanowires, carbon nanohorns, or carbon nanorings. When a particle diameter of the conductive powder constituting the microporous layers 121 and 121' is too small, pressure therein is so high that diffusion of gas may be insufficient. On the other hand, when a particle diameter of the conductive powder constituting the microporous layers 121 and 121' is too large, uniform diffusion of gas is difficult. Therefore, considering the diffusion effects of gas, a conductive powder having an average particle diameter ranging from 10 nm to 50 nm may be generally used.

The gas diffusion layers 120 and 120' may be a commercially available product. Alternatively, the gas diffusion layers 120 and 120' may be respectively prepared by directly coating the microporous layers 121 and 121' on a commercially available carbon paper. In the microporous layers 121 and 121', a gas is diffused through pores formed between conductive powder particles, and an average diameter of the pores is not particularly limited. For example, an average pore diameter of each of the microporous layers 121 and 121' may be in a range of 1 nm to 10 micrometers ("pm"). Specifically, the average pore diameter of each of the microporous layers 121 and 121' may be in a range of 5 nm to 1 µm, more specifically, 10 nm to 500 nm, even more specifically, 50 nm to 400 nm.

The thickness of each of the gas diffusion layers 120 and 120' may be in a range of 200 µm to 400 µm, considering gas diffusion effects and an electrical resistance of the gas diffusion layers 120 and 120'. For example, the thickness of each of the gas diffusion layers 120 and 120' may be in a range of 100 µm to 350 µm, specifically, 200 µm to 350 µm.

The catalyst layers 110 and 110' may function as a fuel electrode and an oxygen electrode, each of which includes the electrode catalyst for a fuel cell and a binder, and may further include a material that increases an electrochemical surface area of the electrode catalyst. The electrode catalyst for a fuel cell is the same as described above, and thus, a detailed description thereof will not be provided herein.

The catalyst layers 110 and 110' each may have a thickness of 10 µm to 100 µm so as to effectively activate an electrode reaction and not to excessively increase an electrical resistance of each layer. For example, the thickness of each of the catalyst layers 110 and 110' may be in a range of 20 µm to 60 µm, specifically, 30 µm to 50 µm.

The catalyst layers 110 and 110' each may further include a binder resin used to improve an adhesive strength of a catalyst layer and transfer hydrogen ions. The binder resin may be a proton conductive polymer resin. For example, the binder resin may be a polymer resin having at a side chain thereof a cation-exchange group selected from the group including a sulfonic acid group, a carboxylic acid group, a phosphoric acid group, a phosphonic acid group, and derivatives thereof. In particular, the binder resin may include at least one proton conductive polymer selected from a fluoro-based polymer, a benzimidazole-based polymer, a polyimide-based polymer, a polyetherimide-based polymer, a polyphenylenesulfide-based polymer, a polysulfone-based polymer, a polyethersulfone-based polymer, a polyetherketone-based polymer, a polyether-etherketone-based polymer, and a polyphenylquinoxaline-based polymer.

The catalyst layers 110 and 110', the microporous layers 121 and 121', and the supports 122 and 122' may be respectively disposed adjacent with one another. If desired, layers having other functions may be further disposed therebetween. These layers constitute a cathode and an anode of the MEA.

The electrolyte membrane 100 is disposed between the catalyst layers 110 and 110'. The electrolyte membrane 100 is not particularly limited, and, for example, may be at least one polymer electrolyte membrane selected from the group including a polybenzimidazole ("PBI") membrane, a cross-linked PBI membrane, a poly(2,5-benzimidazole) ("ABPBI") membrane, a polyurethane membrane, and a modified polytetrafluoroethylene ("PTFE") membrane.

The electrolyte membrane 100 may be impregnated with phosphoric acid, an organic phosphoric acid, or other acids. For example, the electrolyte membrane 100 may be impregnated with a phosphoric acid-based material such as phosphoric acid, polyphosphoric acid, phosphonic acid (H₃PO₃), orthophosphoric acid (H₃PO₄), pyrophosphoric acid (H₄P₂O₇) triphosphoric acid (H₅P₃O₁₀), metaphosphoric acid, or a derivative thereof. The concentration of the phosphoric acid-based material is not particularly limited, and, for example, at least 80 wt%, specifically at least 90 wt%, more specifically at least 95 wt%, even more specifically at least 98 wt% of a phosphoric acid aqueous solution may be used. For example, 80 to 100 wt% of a phosphoric acid aqueous solution may be used.

The MEA may exhibit a higher cell performance even at an initial stage of operation thereof due to smooth fuel supply than that of a typical MEA using a general catalyst layer that includes pores having a diameter of 100 nm or less and is not hydrophilically treated.

According to an embodiment, the MEA may achieve a higher cell voltage within the same period of time than a typical MEA. This indicates that time taken to reach a certain voltage can be shortened. For example, when the MEA operates at 150 °C in non-humidified conditions, a cell voltage of the MEA at a current density of 0.2 A/cm² within 5 hours may be 0.63 V or more. The MEA may reduce time taken for a cell voltage to rise by 0.63 V at a current of 0.2 A/cm² up to 40% of the time of a typical MEA.

In addition, the MEA may have a cell voltage of 0.55 V or more at a current density of 0.5 A/cm² after 24 hours of the MEA operation, and voltage loss due to a material resistance of the MEA may be 5% or less with respect to the cell voltage.

According to another embodiment, a fuel cell includes the MEA.

The fuel cell including the MEA may operate at a temperature of 100°C to 300°C. As shown in FIGS. 2 and 3, a fuel, for example, hydrogen may be supplied to the catalyst layer 110 through the bipolar plate 20 and an oxidizing agent, for example, oxygen, may be supplied to the catalyst layer 110' through the bipolar plate 20. Also, at one of the catalyst layers 110 and 110', hydrogen is oxidized to generate a hydrogen ion (H⁺) and then the hydrogen ion (H⁺) conducts the electrolyte membrane 100 and reaches the other thereof, and at the other of the catalyst layers 110 and 110', the hydrogen ion (H⁺) electrochemically reacts with oxygen to generate water (H₂O) and electric energy. Also, the hydrogen supplied as a fuel may be a hydrogen that is generated by reforming hydrocarbon or alcohol, and the oxygen supplied as an oxidizing agent may be supplied with air.

One or more embodiments will now be described more fully with reference to the following examples. These examples are provided only for illustrative purposes and are not intended to limit the scope of any embodiment.

### Manufacture of unit cell

### Example 1

A PtCo/C catalyst having a pore distribution including a surface area of 150 to 250 square meter per gram ("m²/g"), an average particle diameter of about 30 nm, and 50% of pores having an average diameter of 100 nm or less and 50% of pores having an average diameter of larger than 100 nm was subjected to ultraviolet treatment to prepare a catalyst 1 exhibiting hydrophilicity. The PtCo/C catalyst is basically a water repellent catalyst. To render the PtCo/C catalyst hydrophilic, the PtCo/C catalyst was spread to a thickness of about 1 mm in an ultraviolet oven (MT-UV-O 03 manufactured by Minuta Technology), and then treated with ultraviolet rays having a power density of 10 mW/cm² for 3 hours. A bond ratio of [C-O]/[C=O] according to XPS before and after the hydrophilic treatment of the catalyst 1 was measured in the same manner as an XPS analysis method of Evaluation Example 1, which will be described below. A bond ratio of [C-O]/[C=O] before the hydrophilic treatment of the catalyst 1 was 0.7, and a bond ratio of [C-O]/[C=O] after the hydrophilic treatment of the catalyst 1 was 1.3.

As a hydrophobic catalyst, a PtCo/C catalyst having a pore distribution including 20% of pores having a surface area of 800 to 1000 m²/g, an average particle diameter of about 10 nm, and 20% of pores having an average diameter of 100 nm or less and 80% of pores having an average diameter of larger than 100 nm was prepared to be a catalyst 2. A bond ratio of [C-O]/[C=O] according to XPS of the catalyst 2 was 0.7.

A catalyst slurry including 0.5 g of an electrode catalyst including the catalysts 1 and 2 mixed at a weight ratio of 20:80, 2 g of NMP, and 0.25 g of a polybenzoxazine ("PBOA") binder solution (5% in H₂O) was coated on a gas diffusion layer including a carbon paper having a thickness of 280 µm and a microporous layer (MPL) that was formed of Ketjen black and coated on the carbon paper, and then dried in an oven at 80 °C for 1 hour, at 120 °C for 30 minutes, and at 150 °C for 10 minutes, thereby forming each catalyst layer of a cathode and an anode. Then, a polybenzoxazine polymer membrane impregnated with 85 wt% of phosphoric acid was disposed between the prepared cathode and the anode, thereby completing the manufacture of an MEA.

### Example 2

An MEA was manufactured in the same manner as in Example 1, except that the catalysts 1 and 2 were mixed at a weight ratio of 40:60 in the process of forming a catalyst layer.

### Example 3

An MEA was manufactured in the same manner as in Example 1, except that the catalysts 1 and 2 were mixed at a weight ratio of 60:40 in the process of forming a catalyst layer.

### Example 4

An MEA was manufactured in the same manner as in Example 1, except that the catalysts 1 and 2 were mixed at a weight ratio of 90:10 in the process of forming a catalyst layer.

### Comparative Example 1

An MEA was manufactured in the same manner as in Example 1, except that 100% of a water repellent PtCo/C catalyst (material prior to hydrophilic treatment of the catalyst 1) having a pore distribution including a surface area of 150 to 250 m²/g, an average particle diameter of about 30 nm, and 50% of pores having an average diameter of 100 nm or less and 50% of pores having an average diameter of 100 nm or more was used in the process of forming a catalyst layer.

### Comparative Example 2

An MEA was manufactured in the same manner as in Example 1, except that the catalysts 1 and 2 were mixed at a weight ratio of 95:5 in the process of forming a catalyst layer.

### Evaluation Example 1: XPS analysis of catalyst layer

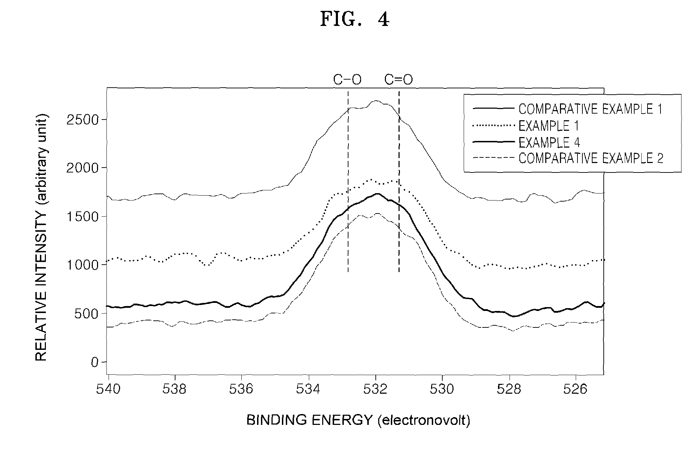

To measure a degree of hydrophilicity of a catalyst layer, catalyst layers of unit cells manufactured according to Examples 1 and 4 and Comparative Examples 1 and 2 were analyzed by Micro-XPS, and chemical binding states at the O1s peak of each catalyst layer were curve-fitted using an XPSPEAK program. The results are shown in FIG. 4 and Table 1 below.

**Table 1**

| | Proportion of Catalyst (wt%) | | Intensity of O(C=O) peak | Intensity of O(C-O) peak | Bond ratio of [C-O]/[C=O] |
|---|---|---|---|---|---|
| | hydrophilic | hydrophobic | | | |
| Comparative Example 1 | - | 100 | 58.90 | 41.10 | 0.7 |
| Example 1 | 20 | 80 | 55.62 | 44.38 | 0.8 |
| Example 4 | 90 | 10 | 51.06 | 48.94 | 0.96 |
| Comparative Example 2 | 95 | 5 | 49.08 | 50.92 | 1.04 |

### Evaluation Example 2: Analysis of cell performance

To evaluate cell performances of the MEAs manufactured according to Examples 1 to 4 and Comparative Examples 1 and 2, about 250 cubic centimeters ("ccm") of air and 100 ccm of hydrogen were respectively supplied to the cathode and the anode of each MEA, and each unit cell operated at 150 °C in non-humidified conditions.

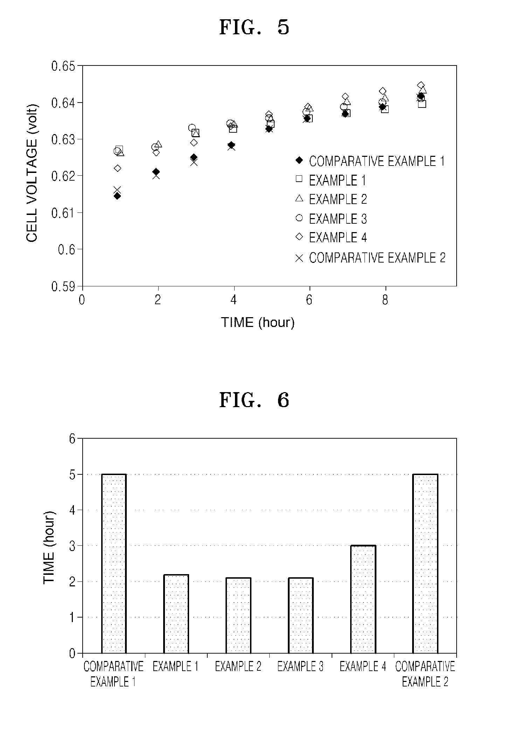

A cell voltage according to operating time at a current density of 0.2 A/cm² of each MEA was measured and the measurement results are shown in FIG. 5. As illustrated in FIG. 5, it was confirmed that the MEAs of Examples 1 to 4 exhibited a higher cell voltage within the same operating time than that of the MEAs of Comparative Examples 1 and 2. In particular, each of the MEAs of Examples 1 to 4 had a cell voltage of 0.63 V or more within 5 hours after starting to operate.

A time taken for a cell voltage to rise by 0.63 V of each MEA is shown in FIG. 6. As illustrated in FIG. 6, it was confirmed that time taken for a cell voltage to rise by 0.63 V at a current density of 0.2 A/cm² of the MEAs of Examples 1 to 4 was reduced up to 40 to 60% of the time of the MEA of Comparative Example 1.

The results indicate that when a hydrophilic catalyst and a hydrophobic catalyst are mixed at an appropriate ratio, cell performances can be improved.

To analyze cell performances of the unit cells of Comparative Example 1 and Examples 1 and 3 24 hours after starting to operate, mass transfer overpotential at a current density of 0.5 A/cm² of each unit cell was measured and a voltage loss with respect to a total voltage was calculated. The results are shown in Table 2 below.

**Table 2**

| | Proportion of Catalyst (wt%) | | Mass transfer overpotential (mV) | Voltage loss (%) |
|---|---|---|---|---|
| | hydrophilic | hydrophobic | | |
| Comparative Example 1 | - | 100 | 34 | 5.7 |
| Example 1 | 20 | 80 | 27 | 4.5 |
| Example 3 | 60 | 40 | 18 | 3 |

As shown in Table 2, it was confirmed that a voltage loss due to a material resistance at a current density of 0.5 A/cm² of the MEAs of Examples 1 and 3 24 hours after operation was 30 millivolts ("mV") or less. Such a voltage loss is within a range of 5% or less with respect to a total voltage at a current density of 0.5 A/cm².

As described above, according to one or more of the above embodiments, an electrode catalyst for a fuel cell rapidly controls phosphoric acid to move into small pores at an initial stage of operation of an MEA, thereby securing a path for the migration of a conductor and a path for the diffusion of a fuel, and thus, an activation time of the MEA may be shortened.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. An electrode catalyst for a fuel cell, the electrode catalyst comprising a first catalyst that exhibits hydrophilicity and a second catalyst that exhibits hydrophobicity , the first catalyst comprising:
pores, wherein at least 50 volume% of the pores of the first catalyst have an average diameter of 100 nanometers or less in a pore distribution;
wherein the first catalyst comprises a carbonaceous support and a Group 8, Group 9, or Group 10 metal catalyst disposed on the carbonaceous support;
the second catalyst comprising pores, wherein at least 50 volume% of the pores of the second catalyst have an average diameter of 100 nanometers or greater, and
wherein the second catalyst comprises a carbonaceous support and a Group 8, Group 9, or Group 10 metal catalyst disposed on the carbonaceous support; and
wherein an amount of the first catalyst is in a range of 20 to 90 weight% based on the total weight of the electrode catalyst and wherein an amount of the second catalyst is in a range of 10 to 80 weight% based on the total weight of the electrode catalyst.

2. The electrode catalyst of claim 1, wherein the first catalyst has a [C-O]/[C=O] bond ratio of 0.8 or greater as determined by X-ray photoelectron spectroscopy.

3. The electrode catalyst of claim 1 or 2, wherein said hydrophobicity is expressed by a [C-O]/[C=O] bond ratio of 0.7 or less as determined by X-ray photoelectron spectroscopy.

4. The electrode catalyst of any of claims 1-3, wherein the metal catalyst comprises at least one selected from the group comprising platinum, palladium, ruthenium, iridium, osmium, a platinum-palladium alloy, a platinum-ruthenium alloy, a platinum-iridium alloy, a platinum-osmium alloy, and a platinum-M alloy wherein M is at least one selected from the group comprising gallium, titanium, vanadium, chromium, manganese, iron, cobalt, nickel, copper, silver, gold, zinc, tin, molybdenum, tungsten, and Rh.

5. A method of preparing an electrode catalyst for a fuel cell, the method comprising:
hydrophilically treating a first catalyst comprising a carbonaceous support and a Group 8, Group 9, or Group 10 metal catalyst disposed on the carbonaceous support, the first catalyst further comprising pores, wherein at least 50 volume% of the pores of the first catalyst have an average diameter of 100 nm or less; and
mixing the first catalyst with a second catalyst exhibiting hydrophobicity, the second catalyst comprising pores, wherein at least 50 volume% of the pores of the second catalyst have an average diameter of 100 nanometers or greater;
wherein the second catalyst comprises a carbonaceous support and a Group 8, Group 9, or Group 10 metal catalyst disposed on the carbonaceous support;
wherein an amount of the first catalyst is in a range of 20 to 90 weight% based on the total weight of the electrode catalyst and wherein an amount of the second catalyst is in a range of 10 to 80 weight% based on the total weight of the electrode catalyst.

6. The method of claim 5, wherein the hydrophilically treating comprises ultraviolet treatment, plasma treatment, ozone treatment, corona discharge treatment, or chemical treatment.

7. The method of claim 6, wherein the ultraviolet treatment is performed by ultraviolet rays having an intensity of 1 to 30 milliwatts per square centimeter for 1 to 10 hours.

8. A membrane electrode assembly comprising:
a cathode;
an anode facing the cathode; and
an electrolyte membrane disposed between the cathode and the anode, wherein at least one of the cathode and the anode comprises a catalyst layer comprising the electrode catalyst for a fuel cell according to any of claims 1-4.

9. The membrane electrode assembly of claim 8, further comprising phosphoric acid dispersed into the pores of the first catalyst during operation of the membrane electrode assembly.

10. A fuel cell comprising the membrane electrode assembly according to claim 8 or 9.

## Patentansprüche

1. Elektrodenkatalysator für eine Brennstoffzelle, wobei der Elektrodenkatalysator einen ersten Katalysator, der hydrophile Eigenschaften aufweist und einen zweiten Katalysator umfasst, der hydrophobe Eigenschaften aufweist, wobei der erste Katalysator Folgendes umfasst:
Poren, wobei mindestens 50 Volumen% der Poren des ersten Katalysators einen durchschnittlichen Durchmesser von 100 Nanometern oder weniger in einer Porenverteilung aufweisen;
wobei der erste Katalysator einen kohlenstoffhaltigen Träger und einen Metallkatalysator der Gruppe 8, Gruppe 9 oder Gruppe 10 umfasst, der auf dem kohlenstoffhaltigen Träger angeordnet ist;
wobei der zweite Katalysator Poren umfasst, wobei mindestens 50 Volumen% der Poren des zweiten Katalysators einen durchschnittlichen Durchmesser von 100 Nanometern oder größer aufweisen, und
wobei der zweite Katalysator einen kohlenstoffhaltigen Träger und einen Metallkatalysator der Gruppe 8, Gruppe 9 oder Gruppe 10 umfasst, der auf dem kohlenstoffhaltigen Träger angeordnet ist; und
wobei eine Menge des ersten Katalysators basierend auf dem Gesamtgewicht des Elektrodenkatalysators in einem Bereich von 20 bis 90 Gewicht% liegt und wobei eine Menge des zweiten Katalysators basierend auf dem Gesamtgewicht des Elektrodenkatalysators in einem Bereich von 10 bis 80 Gewicht% liegt.

2. Elektrodenkatalysator nach Anspruch 1, wobei der erste Katalysator ein [C-O]/[C=O]-Bindungsverhältnis von 0,8 oder größer aufweist, das durch eine Röntgenphotoelektronenspektroskopie bestimmt wird.

3. Elektrodenkatalysator nach Anspruch 1 oder 2, wobei die hydrophoben Eigenschaften durch ein [C-O]/[C=O]-Bindungsverhältnis von 0,7 oder weniger ausgedrückt werden, das durch eine Röntgenphotoelektronenspektroskopie bestimmt wird.

4. Elektrodenkatalysator nach einem beliebigen der Ansprüche 1-3, wobei der Metallkatalysator mindestens eins umfasst, das aus der Gruppe ausgewählt wird, die Platin, Palladium, Ruthenium, Iridium, Osmium, eine Platin-Palladium-Legierung, eine Platin-Ruthenium-Legierung, eine Platin-Iridium-Legierung, eine Platin-Osmium-Legierung und eine Platin-M-Legierung umfasst, wobei M mindestens eines ist, das aus der Gruppe ausgewählt wird, die Gallium, Titan, Vanadium, Chrom, Mangan, Eisen, Cobalt, Nickel, Kupfer, Silber, Gold, Zink, Zinn, Molybdän, Wolfram und Rh umfasst.

5. Verfahren für die Herstellung eines Elektrodenkatalysators für eine Brennstoffzelle, wobei das Verfahren Folgendes umfasst:
hydrophiles Behandeln eines ersten Katalysators, der einen kohlenstoffhaltigen Träger und einen Metallkatalysator der Gruppe 8, Gruppe 9 oder Gruppe 10 umfasst, der auf dem kohlenstoffhaltigen Träger angeordnet ist, wobei der erste Katalysator zusätzlich Poren umfasst, wobei mindestens 50 Volumen% der Poren des ersten Katalysators einen durchschnittlichen Durchmesser von 100 Nanometern oder weniger aufweisen; und
Vermischen des ersten Katalysators mit einem zweiten Katalysator, der hydrophobe Eigenschaften aufweist, wobei der zweite Katalysator Poren umfasst, wobei mindestens 50 Volumen% der Poren des zweiten Katalysators einen durchschnittlichen Durchmesser von 100 Nanometern oder größer aufweisen;
wobei der zweite Katalysator einen kohlenstoffhaltigen Träger und einen Metallkatalysator der Gruppe 8, Gruppe 9 oder Gruppe 10 umfasst, der auf dem kohlenstoffhaltigen Träger angeordnet ist;
wobei eine Menge des ersten Katalysators basierend auf dem Gesamtgewicht des Elektrodenkatalysators in einem Bereich von 20 bis 90 Gewicht% liegt und wobei eine Menge des zweiten Katalysators basierend auf dem Gesamtgewicht des Elektrodenkatalysators in einem Bereich von 10 bis 80 Gewicht% liegt.

6. Verfahren nach Anspruch 5, wobei das hydrophile Behandeln eine ultraviolette Behandlung, Plasmabehandlung, Ozonbehandlung, Koronaentladungsbehandlung oder chemische Behandlung umfasst.

7. Verfahren nach Anspruch 6, wobei die ultraviolette Behandlung über 1 bis 10 Stunden mit ultravioletten Strahlen durchgeführt wird, die eine Intensität von 1 bis 30 Milliwatt pro Quadratzentimeter aufweisen.

8. Membranelektrodenanordnung, die Folgendes umfasst:
eine Kathode;
eine Anode, die der Kathode gegenüberliegt; und
eine Elektrolytmembran, die zwischen der Kathode und der Anode angeordnet ist,
wobei mindestens eine der Kathode und der Anode eine Katalysatorschicht umfasst, welche den Elektrodenkatalysator für eine Brennstoffzelle nach einem beliebigen der Ansprüche 1-4 umfasst.

9. Membranelektrodenanordnung nach Anspruch 8, die zusätzlich Phosphorsäure umfasst, die während des Betriebs der Membranelektrodenanordnung in die Poren des ersten Katalysators dispergiert wird.

10. Brennstoffzelle, welche die Membranelektrodenanordnung nach Anspruch 8 oder 9 umfasst.

## Revendications

1. Catalyseur d'électrode pour pile à combustible, le catalyseur d'électrode comprenant un premier catalyseur présentant une hydrophilie et un second catalyseur présentant une hydrophobie, le premier catalyseur comprenant:
des pores, où au moins 50% en volume des pores du premier catalyseur ont un diamètre moyen de 100 nanomètres ou moins au niveau de la distribution des pores;
où le premier catalyseur comprend un support carboné et un catalyseur de métal de groupe 8, groupe 9 ou groupe 10 disposé sur le support carboné ;
le second catalyseur comprenant des pores, où au moins 50% en volume des pores du second catalyseur ont un diamètre moyen de 100 nanomètres ou plus, et
où le second catalyseur comprend un support carboné et un catalyseur de métal de groupe 8, groupe 9 ou groupe 10 disposé sur le support carboné ; et
où une quantité du premier catalyseur est comprise entre 20 et 90 % en poids sur la base du poids total du catalyseur d'électrode et où une quantité du second catalyseur est comprise entre 10 et 80 % en poids sur la base du poids total du catalyseur d'électrode.

2. Catalyseur d'électrode selon la revendication 1, où le premier catalyseur présente un rapport de liaison [C-O]/[C=O] supérieur ou égal à 0,8 comme cela est déterminé par la spectroscopie à photoélectrons à rayons X

3. Catalyseur d'électrode selon la revendication 1 ou 2, où ladite hydrophobie est exprimée par un rapport de liaison [C-O]/[C=O] inférieur ou égal à 0,7 comme cela est déterminé par la spectroscopie à photoélectrons à rayons X.

4. Catalyseur d'électrode selon l'une des revendications 1 à 3, où le catalyseur de métal comprend au moins un élément sélectionné parmi le groupe consistant en platine, palladium, ruthénium, iridium, osmium, un alliage platine-palladium, un alliage platine-ruthénium, un alliage platine-iridium, un alliage platine-osmium et un alliage platine-M où M est au moins un élément sélectionné parmi le groupe consistant en gallium, titane, vanadium, chrome, manganèse, fer, cobalt, nickel, cuivre, argent, or, zinc, étain, molybdène, tungstène et Rh.

5. Procédé d'élaboration d'un catalyseur d'électrode pour pile à combustible, le procédé comprenant:
le traitement hydrophile d'un premier catalyseur comprenant un support carboné et un catalyseur de métal de groupe 8, groupe 9 ou groupe 10 disposé sur le support carboné, le premier catalyseur comprenant en outre des pores, où au moins 50% en volume des pores du premier catalyseur ont un diamètre moyen de 100 nanomètres ou moins ; et
le mélange du premier catalyseur avec un second catalyseur présentant une hydrophobie, le second catalyseur comprenant des pores, où au moins 50% en volume des pores du second catalyseur ont un diamètre moyen de 100 nanomètres ou plus ;
où le second catalyseur comprend un support carboné et un catalyseur de métal de groupe 8, groupe 9 ou groupe 10 disposé sur le support carboné ;
où une quantité du premier catalyseur est comprise entre 20 et 90 % en poids sur la base du poids total du catalyseur d'électrode et où une quantité du second catalyseur est comprise entre 10 et 80 % en poids sur la base du poids total du catalyseur d'électrode.

6. Procédé selon la revendication 5, où le traitement hydrophile comprend un traitement par ultraviolets, un traitement au plasma, un traitement à l'ozone, un traitement par décharge de corona ou un traitement chimique.

7. Procédé selon la revendication 6, où le traitement par ultraviolets est réalisé par des rayons ultraviolets ayant une intensité de 1 à 30 milliwatts au centimètre carré pendant 1 à 10 heures.

8. Ensemble électrode à membrane comprenant:
une cathode ;
une anode faisant face à la cathode ; et
une membrane électrolytique disposée entre la cathode et l'anode, où au moins l'une de la cathode et de l'anode comprend une couche catalytique contenant le catalyseur d'électrode pour une pile à combustible selon l'une quelconque des revendications 1 à 4.

9. Ensemble électrode à membrane selon la revendication 8, comprenant en outre de l'acide phosphorique dispersé dans les pores du premier catalyseur pendant le fonctionnement de l'ensemble électrode à membrane.

10. Pile à combustible comprenant l'ensemble électrode à membrane selon la revendication 8 ou 9.
